# EUROPEAN PATENT SPECIFICATION

(11) **EP 3 220 377 B1**
(45) Date of publication and mention of the grant of the patent: **11.09.2019**
(21) Application number: 15859857.3
(22) Date of filing: 11.11.2015
(51) Int. Cl.: B41M 5/42, B41M 5/50, B41M 5/44, B41M 5/52

(54) **TAPE FOR LABEL WRITER**
BAND FÜR ETIKETTENSCHREIBER
RUBAN POUR DISPOSITIF D'INSCRIPTION D'ÉTIQUETTES

(30) Priority: 11.11.2014 JP 2014229143
(43) Date of publication of application: 20.09.2017
(73) Proprietor: Nichiban Co. Ltd., Tokyo 112-8663 (JP)
(72) Inventor: Sugai, Jugaku, Tokyo 112-8663 (JP); Hikita, Takao, Gifu-shi Gifu 501-1132 (JP); Uno, Shinsuke, Gifu-shi Gifu 501-1132 (JP)
(74) Representative: SSM Sandmair
(86) International application number: PCT/JP2015/081772
(87) International publication number: WO 2016/076367

(56) References cited:
- JP-A- H05 221 167
- JP-A- H08 108 644
- JP-A- H08 115 050
- JP-A- H11 231 785
- JP-A- 2003 321 657
- US-A1- 2005 181 946
- US-A1- 2007 204 493

## Description

### Technical Field

The present invention relates to a tape for label writer printable by an ink ribbon printing system (heat transfer) or an inkjet printing system.

### Background Art

A label writer is known as a device for producing a printed label allowed to attach to documents, closet shelves or the like for index or display. In general, a tape as a printing medium is placed in a cartridge and then printed by the label writer. Subsequently, the printed tape is cut into a given length for use as a label.

The printing system for use in the label writer includes a thermal printing system, an ink ribbon printing system (heat transfer) and an inkjet printing system.

The thermal printing system uses thermal paper as a printing medium developing color by heat. However, when thermal printing is carried out on such thermal paper, print density on the thermal paper decreases approximately in half a year. In addition, direct sunlight or chemicals may further shorten life duration of the print density. Accordingly, the thermal printing system is utilized for a label of short-term usage such as a transportation-aimed label.

The ink ribbon printing system (heat transfer) and the inkjet printing system allow to conduct printing on a printing medium with no color development.

In other words, in the ink ribbon printing system (heat transfer) and the inkjet printing system, the printing medium does not develop color by itself, but printing is carried out on the printing medium through heat transfer in the use of an ink ribbon, or ink jet.

Because the printing medium is a label, the printing medium needs to have an adhesive layer for attachment to an adherend. A tape-shaped printing medium used in the label writer is generally rolled enabling continuous printing on the label.

A separator layer may be used to protect the adhesive layer.

In recent years, as a substrate layer, a printing medium for a label writer tape in the ink ribbon printing system (heat transfer), the inkjet printing system, etc. has been adopting a synthetic resin film, in particular a transparent synthetic resin film, with a surface on which processing has been carried out to make it printable.

In this case, because of the synthetic resin film, the back surface of the substrate layer is provided with an ink layer having various kinds of hues in order to enable the clear identification of print on the substrate layer. The synthetic resin film is usually printed so as to be a color tape, including a white, red, yellow, or blue one.

Thus, as the label writer tape, when the synthetic resin film, in particular the transparent synthetic resin film, is used for the substrate layer, the layer structure will basically be a three-layered structure of the substrate layer/an ink layer/an adhesive layer.

In many cases, a printed label used as the tape of a label writer is attached to an adherend for a long time. Then, after a role as the printed label has been completed, the tape should be peeled off from the adherend. However, when a colored tape label has been attached onto the adherend for a long period of time, the following problem may occur: that is, by making components in an adhesive layer transferred into an ink layer, an anchoring property between the ink layer and a substrate layer deteriorates. Accordingly, when the label is peeled off from the adherend, the ink layer and the adhesive layer remain on the adherend. In addition, due to the long-period attachment of the label, discoloration may occur due to deterioration of the ink layer; or the ink layer and the adhesive layer may remain when the label is peeled off from the adherend.

Patent Literature 1 discloses a colored film with an adhesive layer. In this case, the colored film has colored appearance, since one surface of a transparent film is provided with such a colored adhesive layer. However, because Patent Literature 1 is not directed to the label writer, Patent Literature 1 does not consider discoloration of ink, or residual ink or residual adhesive due to cohesive failure or anchoring fracture when a label is peeled off from an adherend.

Patent Literature 2 discloses a tape for label writer used in an inkjet printing system, in which an ink absorbing layer and a porous polymer layer required in the inkjet printing system are provided on a substrate layer, but an ink layer required for a color tape is not provided. Because Patent Literature 2 does not provide an ink layer, Patent Literature 2 does not refer to residual ink or residual adhesive when a label is peeled off, or discoloration in an ink layer.

### Citation List

### Patent Literature

Patent Literature 1: JP 3500240 B2
Patent Literature 2: JP 3451757 B2

JPH05221167 is a prior art document which discloses a tape for label writer, wherein: the tape for label writer has a layer structure comprising at least a process layer, a substrate layer, an ink layer, a masking layer, and an adhesive layer in this order; the substrate layer is a synthetic resin film; and the ink layer comprises a polyester-based resin, and a pigment.

### Summary of Invention

### Technical Problem

It is an object of the present invention to provide a tape for label writer using a synthetic resin film as a substrate layer, the back surface of the substrate layer being provided with an ink layer. In the label writer tape, even if the tape is peeled off, the tape being attached as a printed label onto an adherend for a long period of time, no residual ink or adhesive remains on the adherend. Further, ink will not be discolored regardless of such a long time attachment.

### Solution to Problem

The inventors have found the following. In a tape for label writer where a synthetic resin film, in particular a transparent synthetic resin film, is used for a substrate layer, and a colorant layer is thus provided, the following problems discussed hereinabove may be revealed: (i) components in an adhesive layer may be transferred into an ink layer, thereby deteriorating anchoring properties between the ink layer and the substrate layer, so that residual ink and residual adhesive may remain on an adherend when the tape is peeled off from the adherend, (ii) cohesive failure may occur in the ink layer with the lapse of time, which causes discoloration in the ink layer when the tape has been attached onto the adherend for a long period of time, and (iii) due to degradation, residual ink or residual adhesive may remain on the adherend when the tape is peeled off from the adherend.

Here, the inventors have arrived at an idea that introduction of a barrier layer between the ink layer and the adhesive layer can inhibit adhesive components from being transferred into the ink layer, and can suppress anchoring fracture between the ink layer and the substrate layer. Accordingly, this can prevent ink and adhesive from remaining on an adherend when the label is peeled off from the adherend. Furthermore, the inventors have arrived at an idea that using a specific adhesive resin for the adhesive resin in the ink layer to prevent cohesive failure in the ink layer will prevent degradation of the ink layer, prevent discoloration in the ink layer, and suppress cohesive failure, thereby preventing ink and adhesive from remaining on an adherend when the label is peeled off from the adherend.

To be further specific, the inventors have found the following. In a tape for label writer where a synthetic resin film, in particular a transparent synthetic resin film, is used for a substrate layer while a colorant layer is provided, a barrier layer is provided between an ink layer and an adhesive layer; and a specific adhesive resin is used in an ink layer. With this, even if the tape is peeled off after it as a printed label has been attached to the adherend for a long period of time, ink and adhesive do not remain on the adherend, and ink is not discolored even after such a long-term attachment.

In other words, according to the present invention, provided is a tape for label writer, which is defined in claim 1.

Preferred embodiments of the invention are defined in the dependent claims.

### Advantageous Effects of Invention

According to a tape for label writer using a synthetic resin film colorized by an ink layer of the present invention, it is possible to provide the tape for label writer capable of preventing ink and adhesive from remaining on an adherend when the label is peeled off from the adherend. The present invention can also prevent discoloration in an ink layer even when the label has been used for a long term.

### Brief Description of Drawings

Fig. 1 is a cross-sectional view of a tape for label writer of the present invention having a five-layered structure.
Fig. 2 is a cross-sectional view of a tape for label writer of the present invention having a six-layered structure.

### Description of Embodiments

A tape for label writer of the present invention includes at least a process layer, a substrate layer, an ink layer, a barrier layer, and an adhesive layer. A separator layer may be included as needed.

### 1. Process Layer

The tape for label writer of the present invention contains a process layer for conducting printing on a substrate layer. The process layer is provided on the printed side of the substrate layer.

The process layer varies depending on whether printing is based on an ink ribbon printing system (heat transfer) or an inkjet printing system. In the ink ribbon printing system (heat transfer), the substrate layer is subjected to a coating process for enabling printing with the use of an ink ribbon, and an adhesive resin is used as a processing agent to which both of the substrate layer and ink ribbon are easy to attach. Examples of the adhesive resin include polyester resin and polyurethane resin. A solution of such resin in an organic solvent is applied to form the process layer. As the organic solvent, toluene or methyl ethyl ketone is known. In this case, applying and drying are often performed to form the process layer.

The amount of coating after the drying in the ink ribbon printing system (heat transfer) is generally around 0.10 to around 0.50 g/m².

In an inkjet printing system, because ink is sprayed, a process layer for absorbing the ink is provided on the substrate layer. Examples of an ink-absorbent processing agent include a processing agent that contains a water-soluble polymer such as polyvinyl alcohol, polyvinylpyrrolidone or gelatin as the main component; a processing agent that contains a water-soluble polymer into which fine particles such as silica, alumina, glass beads or synthetic resin microbeads are incorporated; and a processing agent that contains a superabsorbent polymer as the main component. In addition, in order to provide water resistance, there is a method for providing a high molecular porous layer, and forming a film by heat treatment. Furthermore, the process layer may be used as a process layer for a nonaqueous inkjet ink, instead of an aqueous inkjet ink.

The amount of coating on the process layer for an inkjet ink after drying is generally around 0.50 to around 1.5 g/m². The process layer may be composed of two or more layers.

### 2. Substrate Layer

A synthetic resin film is used as the substrate layer. In particular, the synthetic resin film preferably includes a transparent synthetic resin film, which includes a synthetic resin film made of polyethylene, polypropylene, polyvinyl chloride, polyester, polycarbonate, or the like.

The thickness of the substrate layer is usually 5 µm to 300 µm, preferably 7 µm to 200 µm, more preferably 9 µm to 100 µm, still more preferably 10 µm to 50 µm, particularly preferably 12 µm to 25 µm, most preferably 13 µm to 23 µm. In case where the substrate layer is too thick, the substrate layer becomes easy to peel off when attached to curved surfaces. In addition, in case where the substrate layer is too thin, the productivity is damaged because of insufficient tension in a production process. Furthermore, there exist two layers of the substrate layer and the barrier layer, two layers of the substrate layer and the barrier layer being in a laminated state so as to sandwich the ink layer therebetween. Accordingly, when the thickness of the substrate layer increases such that the thickness of the substrate layer is beyond 23 µm, the attachment performance to curved surfaces may be slightly reduced, although there is no problem in a practical use. The substrate layer may be composed of two or more layers. In this case, the ink layer may be placed between the substrate layers, and thus the substrate layer/ink layer/substrate layer may be formed. Accordingly, when the substrate layer is composed of two layers, for example, the process layer/substrate layer/ink layer/substrate layer/ink layer/barrier layer/adhesive layer may be formed.

### 3. Ink Layer

The ink layer is provided on the substrate layer on the opposite side from the process layer.

The ink layer contains a pigment and adhesive resin. As the pigment, a publicly known pigment may be used, which is conventionally used in various kinds of fields. Specifically, an organic pigment such as a phthalocyanine-based-, azo-based-, condensed azo-based-, azo lake-based-, anthraquinone-based-, perylene/perinone-based-, indigo/thioindigo-based-, azomethineazo-based-, isoindoline-based-, dioxane-based-, quinacridone-based-, aniline black-based- or carbon black-based-pigment, or the like may be included. Further, titanium oxide-based-, iron oxide-based-, iron hydroxide-based-, chromium oxide-based-, chromic acid-based-, aluminum powder-based-, bronze powder-based organic pigment, or the like may be included. The pigment may be in any forms, or may be one which has been subjected to a distributed process based on various kinds of publicly known methods.

The adhesive resin is an acryl-based resin.

An acrylic elastomer is the acrylic resin.

Such an acrylic elastomer is generally a polymer having a polymethylene-based saturated chain formed of a polymer of ethyl acrylate or another acrylate, or a polymer having a polymethylene-typed saturated chain formed of a copolymer of ethyl or another acrylate and acrylonitrile. Furthermore, among such acrylic elastomers, an acrylic elastomer is desirable having a structure of block copolymer formed of methyl methacrylate and butyl acrylate. The mass-average molecular weight of the block copolymer formed of methyl methacrylate and butyl acrylate is preferably 60,000 to 100,000, more preferably 70,000 to 90,000. Examples thereof include KURARITY (registered trademark) LA2140e, LA2230, LA2250 and LA1114 made by Kuraray Co., Ltd. In this case, a plurality of acrylic elastomers may be blended. LA2140e made by Kuraray Co., Ltd. is particularly preferable.

The ink layer is usually formed of a mixture of the pigment and the adhesive resin, in which the pigment accounts for 30% to 70% by mass, preferably 35% to 60% by mass, more preferably 40% to 55% by mass, with respect to 100% by mass of a total amount of the ink layer.

The thickness of the ink layer is usually 1 µm to 50 µm, preferably 5 µm to 30 µm, more preferably 7 µm to 25 µm. The ink layer may be composed of two or more layers.

### 4. Barrier Layer

In the present invention, a barrier layer is provided between the ink layer and the adhesive layer in order to inhibit the adhesive layer from being transferred into the ink layer. A synthetic resin film suitable for shutting off the adhesive layer is used as the barrier layer, which is polyester film.

The barrier layer is required to have a sufficient thickness to inhibit the adhesive layer from being transferred into the ink layer, the thickness being usually 1 µm to 70 µm, preferably 5 µm to 50 µm, more preferably 9 µm to 30 µm, still more preferably 10 µm to 20 µm, or particularly preferably, in case of a polyester film, 11 µm to 15 µm. In case where the barrier layer is too thick, the tape becomes thick as a whole and thus easy to peel off when being attached to curved surfaces. In addition, in case where the barrier layer is too thin, the productivity is damaged because of insufficient tension in a production process. It is preferable for the barrier layer to be thinner than the substrate layer. The ratio of thickness of the substrate layer to the barrier layer is preferably the substrate layer : barrier layer = 3 : 1 to 1 : 1, more preferably 2 : 1 to 6 : 5, still more preferably 9 : 5 to 3 : 2. The barrier layer may be composed of two or more layers.

### 5. Adhesive Layer

In general, an adhesive layer of an adhesive material is formed with the use of an adhesive exhibiting a pressure-sensitive adhesive property at room temperature. Examples of such an adhesive include an acryl-based adhesive, natural rubber-based adhesive, synthetic rubber-based adhesive, silicone-based adhesive, vinyl ester-based adhesive, vinyl ether-based adhesive, and urethane-based adhesive. Among them, an acrylic adhesive having good adhesiveness and weather-resistance is preferably used. In general, the monomeric unit of such an acrylic adhesive is (meth)acrylic acid alkyl ester as the main component.

The thickness of the adhesive layer is usually 3 µm to 150 µm, preferably 5 µm to 100 µm, more preferably 9 µm to 50 µm. The adhesive layer may be composed of two or more layers.

### 6. Separator Layer

The tape for label writer of the present invention is provided with, if necessary, a separator layer for protecting the adhesive layer or preventing deterioration. The separator layer is not limited in particular, but those may be used which are used under the general name of releasing paper, releasing film, peeling paper, peeling film, peeling liner, or the like. Specific examples thereof include a polyester film having a silicone-processed surface, paper having a silicone-processed surface, and a laminate of polyethylene and paper having a silicone-processed surface. The thickness of the separator layer is usually around 10 µm to around 300 µm.

### 7. Layer Structure

The tape for label writer of the present invention is defined in claim 1.

The layer structure is a five-layered structure in which at least the process layer/substrate layer/ink layer/barrier layer/adhesive layer are laminated in this order from the outside to the inside (adherend side). The adhesive layer may be optionally provided between those layers. In addition, the separator layer is used to protect the adhesive layer if necessary, so that the layer structure is a six-layered structure of at least the process layer/substrate layer/ink layer/barrier layer/adhesive layer/separator layer. The adhesive layer may be optionally provided between those layers.

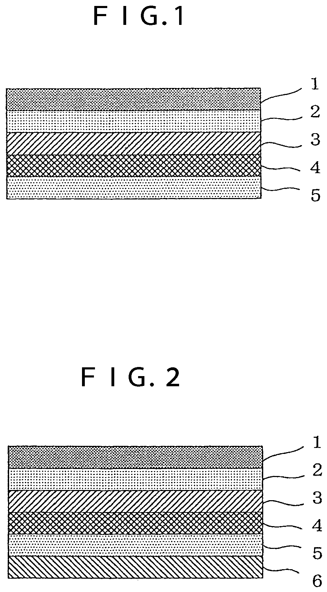

The tape is cut into a required width and length for a label writer to be used, and the cut tape is provided in a rolled state. The size of a cartridge varies depending on a cartridge-type label writer, which determines the width and length of the tape for label writer accordingly. Fig. 1 shows a five-layered structure of the process layer 1/substrate layer 2/ink layer 3/barrier layer 4/adhesive layer 5. Fig. 2 shows a six-layered structure of the process layer 1/substrate layer 2/ink layer 3/barrier layer 4/adhesive layer 5/separator layer 6.

### Examples

Hereinafter, a specific description is made of the present invention with reference to Examples and Comparative Examples. The scope of the present invention is not limited by these Examples. Evaluation methods for the property of the tape for label writer of the present invention are as follows.

### [Contamination on Adherend]

After a weather-resistant test by FADE METER (made by Suga Test Instrument Co., Ltd.), a residual ink and residual adhesive were evaluated by visual observation when the tape was peeled off from an adherend. The weather-resistant test was performed under a condition where the tape that was 12 mm in width × 100 mm was attached to an aluminum plate (A1050P) and then irradiated with UV with the use of a UV carbon arc lamp in the FADE METER at an irradiance: 500 W/m² (300 nm to 700 nm) at a BPT: 63°C for 300 hours based on JISB7751 standard.
A: No ink or adhesive remains on the adherend when the label was peeled off.
C: An ink and adhesive remain on the adherend when the label was peeled off.

### [Discoloration]

Discoloration in the ink layer of the tape after the above-mentioned weather-resistant test was evaluated by visual observation from the process layer.
A: No discoloration
B: Slightly discolored

### [Printing Property]

The tape with 12 mm in width × 1 m was set in a cartridge for TEPRA (registered trademark; made by King Jim Co., Ltd.), and a printing test was performed on a label writer (TEPRA (registered trademark; made by King Jim Co., Ltd.)) which uses a commercial ink ribbon system (heat transfer) to evaluate the printing property.
A: There is no printing blur, and the print is distinctly clear.
C: There is printing blur.

### [Attaching Property to Curved Surfaces]

To an LAN cable (6 mm φ) made of polyvinyl chloride, the tape having a width of 12 mm was attached without being overlapped to each other, and the attaching property to curved surfaces was evaluated.
A: There is no lift of the tape after being attached, and the attaching property to curved surfaces is good.
B: The tape slightly lifts after being attached, but the attaching property to curved surfaces has no problem in use.

### [Total Evaluation]

A: No ink or adhesive remains on the adherend when the label is peeled off. There is no discoloration. The print is also clear. The attaching property to curved surfaces is also good.
B: There is some discoloration of an ink.
C: An ink and adhesive remain on the adherend when the label is peeled off. There is printing blur.

### [Example 1]

A process layer was prepared under a condition where an application liquid having polyester resin (VYLON (registered trademark) 200 made by Toyobo Co., Ltd.) dispersed into toluene and methyl ethyl ketone was applied by a coater to a polyester film (ESTER FILM made by Toyobo Co., Ltd.) of a substrate layer having a thickness of 19 µm, and then dried. The applied amount on the dried process layer is around 0.20 g/m². In addition, an acrylic elastomer (product name: KURARITY LA2140e made by Kuraray Co., Ltd.) was used as acryl-based resin as adhesive resin on the back surface of the substrate layer such that the thickness would become 12 µm, and titanium oxide (rutile type, particle diameter of 0.3 µm to 0.4 µm) as a pigment was mixed such that the titanium concentration would become 47% by mass with respect to 100% by mass of a total amount of an ink layer, followed by coating in order to prepare the ink layer. Furthermore, a polyester film (PET LUMIRROR (registered trademark) #12) made by Toray Industries, Inc.) having a thickness of 12 µm was laminated as a barrier layer. In addition, a silicone-processed releasing paper having a thickness of 85 µm that would become a separator layer was coated with an acrylic adhesive (butyl acrylate/acrylic acid = 95/5) so as to have a thickness of 18 µm as an adhesive layer, and the adhesive layer was laminated onto the above-mentioned barrier layer to yield the tape for label writer. Based on the above-mentioned evaluation method, the tape was peeled off from the adherend after the weather-resistant test. There was no contamination such as a residual ink or residual paste on the adherend, or discoloration in the ink layer. The printing property was also good. The evaluated result is shown in Table 1.

### [Example 2]

The tape for label writer was prepared in the same way as Example 1, except that the acrylic elastomer as the adhesive resin for the ink layer was changed to an acrylic elastomer (product name: KURARITY LA2140e : LA1114 = 9 : 1 made by Kuraray Co., Ltd.) whose molecular weight was different from that of Example 1. Like Example 1, there was no contamination on the adherend due to peeling-off of the tape after the weather-resistant test, or discoloration. The printing property was also good. The evaluated result is shown in Table 1.

### [Reference Example 3]

The tape for label writer was prepared in the same way as Example 1, except that PET LUMIRROR #25 (thickness of 25 µm) made by Toray Industries, Inc. was used as the polyester film of the substrate layer, and the adhesive resin for the ink layer was changed to polyester-based resin (HI-BON (registered trademark) 7663: made by Hitachi Chemical Co., Ltd.). There was no contamination on the adherend due to peeling-off of the tape after the weather-resistant test, but discoloration was slightly found in the ink layer. The evaluated result is shown in Table 1.

### [Comparative Example 1]

The tape for label writer was prepared in the same way as Example 1, except that PET LUMIRROR #38 (thickness of 38 µm) made by Toray Industries, Inc. was used as the polyester film of the substrate layer, the ink layer was provided in which a gravure ink (product name: LAMI-STAR (registered trademark) made by Toyo Ink Co., Ltd., BELLE COLOR (registered trademark) made by Sakata Inx Corporation, LAMIC (registered trademark) made by Dainichiseika Color & Chemicals Mfg. Co., Ltd.) having polyurethane-based resin as a binder was combined with an isocyanate hardener, and the barrier layer was not provided between the adhesive layer and the ink layer. There was a residual ink when the tape was peeled off from the adherend after the weather-resistant test. The evaluated result is shown in Table 1.

### [Comparative Example 2]

The tape for label writer was prepared in the same way as Example 1, except that 1% of benzotriazole-based UV absorber (product name: TINUVIN (registered trademark) 326) was further added to the ink layer. Although a UV absorber was added to improve the weather-resistant, there was a residual ink, like Comparative Example 1. The evaluated result is shown in Table 1.

### [Comparative Example 3]

The tape for label writer was prepared in the same way as Example 1, except that the substrate layer and the ink layer were changed with each other to place the ink layer on the uppermost surface. Placing the ink layer on the uppermost surface achieved a structure in which there was no interaction between the ink and the adhesive, but caused such an inconvenience as dissolution of the ink layer when the process layer was applied. In addition, the obtained tape for label writer exhibited printing blur in the test for printing property. The evaluated result is shown in Table 1. Example 3 in Table 1 is a Reference Example.

**[Table 1]**

| | | EXAMPLE 1 | EXAMPLE 2 | EXAMPLE 3 | COMPARATIVE EXAMPLE 1 | COMPARATIVE EXAMPLE 2 | COMPARATIVE EXAMPLE 3 |
|---|---|---|---|---|---|---|---|
| LAYER STRUCTURE | | PROCESS LAYER/SUBSTRATE LAYER/INK LAYER/BARRIER LAYER/ADHESIVE LAYER/SEPARATOR LAYER | PROCESS LAYER/SUBSTRATE LAYER/INK LAYER/BARRIER LAYER/ADHESIVE LAYER/SEPARATOR LAYER | PROCESS LAYER/SUBSTRATE LAYER/INK LAYER/BARRIER LAYER/ADHESIVE LAYER/SEPARATOR LAYER | PROCESS LAYER/SUBSTRATE LAYER/INK LAYER/ADHESIVE LAYER/SEPARATOR LAYER | PROCESS LAYER/SUBSTRATE LAYER/INK LAYER/ADHESIVE LAYER/SEPARATOR LAYER | PROCESS LAYER/INK LAYER/SUBSTRATE LAYER/ADHESIVE LAYER/SEPARATOR LAYER |
| INK LAYER | ADHESIVE RESIN | ACRYLIC RESIN | ACRYLIC RESIN | POLYESTER RESIN | POLYURETHANE RESIN | POLYURETHANE RESIN | POLYURETHANE RESIN |
| | PIGMENT | TITANIUM OXIDE | TITANIUM OXIDE | TITANIUM OXIDE | TITANIUM OXIDE | TITANIUM OXIDE | TITANIUM OXIDE |
| | UV ABSORBER | UNAVAILABLE | UNAVAILABLE | UNAVAILABLE | UNAVAILABLE | AVAILABLE | UNAVAILABLE |
| BARRIER LAYER | | AVAILABLE | AVAILABLE | AVAILABLE | UNAVAILABLE | UNAVAILABLE | UNAVAILABLE |
| CONTAMINATION ON ADHEREND (RESIDUAL INK, RESIDUAL PASTE) | | A | A | A | C | C | A |
| DISCOLORATION | | A | A | B | A | A | A |
| PRINTING PROPERTY | | A | A | A | A | A | C |
| ATTACHING PROPERTY TO CURVED SURFACES | | A | A | B | A | A | A |
| TOTAL EVALUATION | | A | A | B | C | C | C |
| | | NO CONTAMINATION ON ADHEREND, NO DISCOLORATION, GOOD PRINTING PROPERTY | NO CONTAMINATION ON ADHEREND, NO DISCOLORATION, GOOD PRINTING PROPERTY | THERE IS SOME DISCOLORATION | THERE IS RESIDUAL INK | ALTHOUGH UV ABSORBER IS ADDED, THERE IS RESIDUAL INK | THERE IS PRINTING BLUR |

From the result in Table 1, it is confirmed that, in Examples 1 and 2 and Reference Example 3 where the barrier layer is provided between the adhesive layer and the ink layer, even when the tape is peeled off from the adherend after the weather-resistant test, there is no residual ink or residual paste, while the barrier layer inhibits an adhesive from being transferred into the ink layer. In addition, in Examples 1 and 2 where an acrylic elastomer is used as the adhesive resin for the ink layer, there is no discoloration in the ink layer. On the other hand, in Reference Example 3 where a polyester resin is used as the adhesive resin, discoloration is slightly caused in the ink layer. Furthermore, in Reference Example 3, since the substrate layer is laminated on the barrier layer such that the substrate layer is thicker than those of Examples 1 and 2, the attaching property to curved surfaces is slightly reduced compared to Examples 1 and 2. This however causes no problem in use.

In contrast, because the barrier layer is not provided in Comparative Examples 1 and 2, there are a residual ink and residual paste. In Comparative Example 2, although a UV absorber is added to improve the weather-resistant, there are a residual ink and residual paste. In Comparative Example 3, the substrate layer and the ink layer are replaced each other for placing the ink layer on the uppermost surface. This could create a structure where there is no interaction between the ink layer and the adhesive layer, but degradation of the ink layer exhibited printing blur preventing the tape for label writer from achieving its function. In this regard, because Comparative Examples 1 to 3 do not have the barrier layer, there is no problem in laminating. Accordingly, there is no problem in the attaching property to curved surfaces.

### Industrial Applicability

According to the tape for label writer of the present invention, it is possible to inhibit the adhesive component from being transferred into the ink layer, to suppress anchoring fracture between the ink layer and the substrate layer, and further to prevent cohesive failure using specific adhesive resin for the ink layer. It is thus possible to provide a tape for label writer by which there is no residual ink or residual adhesive on an adherend when the label is peeled off from an adherend. There is also no discoloration in the ink layer. Based on the above, the industrial availability of the present invention is high.

### Reference Signs List

- 1: process layer
- 2: substrate layer
- 3: ink layer
- 4: barrier layer
- 5: adhesive layer
- 6: separator layer

## Claims

1. A tape for label writer, wherein:
(i) the tape for label writer has a layer structure comprising at least a process layer (1) for conducting printing on a substrate layer (2), the substrate layer (2), an ink layer (3) having various kinds of hues in order to enable the clear identification of print on the substrate layer (2), a barrier layer (4), and an adhesive layer (5) in this order;
(ii) the substrate layer (2) is a synthetic resin film; and
(iii) the ink layer (3) comprises one adhesive resin being an acryl-based resin, and a pigment,
**characterized in that**
the acryl-based resin is an acrylic elastomer, wherein the barrier layer (4) comprises a polyester film.

2. The tape for label writer according to claim 1, wherein the layer structure is a layer structure comprising at least a process layer (1), a substrate layer (2), an ink layer (3), a barrier layer (4), an adhesive layer (5), and a separator layer (6) in this order.

3. The tape for label writer according to claim 1 or 2, wherein the barrier layer (4) comprises two or more layers.

4. The tape for label writer according to any one of claims 1 to 3, wherein thickness of the barrier layer (4) is 1 µm to 70 µm.

5. The tape for label writer according to any one of claims 1 to 4, wherein thickness of the substrate layer is 5 µm to 300 µm.

6. The tape for label writer according to any one of claims 1 to 5, wherein ratio of thickness of the substrate layer (2) to thickness of the barrier layer (4) is the substrate layer : barrier layer = 3 : 1 to 1 : 1.

## Patentansprüche

1. Band für Etikettendrucker, wobei:
(i) das Band für Etikettendrucker eine Schichtstruktur aufweist, die mindestens eine Prozessschicht (1) zum Durchführen eines Druckens auf eine Substratschicht (2), die Substratschicht (2), eine Farbschicht (3) mit verschiedenen Arten von Farbtönen, um die eindeutige Druckidentifizierung auf der Substratschicht (2) zu ermöglichen, eine Sperrschicht (4) und eine Klebeschicht (5) in dieser Reihenfolge umfasst;
(ii) die Substratschicht (2) ein synthetischer Harzfilm ist; und
(iii) Farbschicht (3) ein Klebeharz, das ein Harz auf Acrylbasis ist, und ein Pigment umfasst,
**dadurch gekennzeichnet, dass**
das Harz auf Acrylbasis ein Acrylelastomer ist, wobei die Sperrschicht (4) einen Polyesterfilm umfasst.

2. Band für Etikettendrucker nach Anspruch 1, wobei die Schichtstruktur eine Schichtstruktur ist, die mindestens eine Prozessschicht (1), eine Substratschicht (2), eine Farbschicht (3), eine Sperrschicht (4), eine Klebeschicht (5) und eine Trennschicht (6) in dieser Reihenfolge umfasst.

3. Band für Etikettendrucker nach Anspruch 1 oder 2, wobei die Sperrschicht (4) zwei oder mehr Schichten umfasst.

4. Band für Etikettendrucker nach einem der Ansprüche 1 bis 3, wobei eine Dicke der Sperrschicht (4) 1 µm bis 70 µm ist.

5. Band für Etikettenschreiber nach einem der Ansprüche 1 bis 4, wobei eine Dicke der Substratschicht 5 µm bis 300 µm ist.

6. Band für Etikettendrucker nach einem der Ansprüche 1 bis 5, wobei ein Verhältnis der Dicke der Substratschicht (2) zur Dicke der Sperrschicht (4) Substratschicht: Sperrschicht = 3 : 1 bis 1 : 1 ist.

## Revendications

1. Ruban pour dispositif d'inscription d'étiquettes, dans lequel :
(i) le ruban pour dispositif d'inscription d'étiquette présente une structure en couches comprenant au moins une couche de traitement (1) destiné à conduire une impression sur une couche substrat (2), la couche substrat (2), une couche d'encre (3) ayant divers types de teintes afin de permettre l'identification claire d'impression sur la couche substrat (2), une couche barrière (4) et une couche adhésive (5), dans cet ordre ;
(ii) la couche substrat (2) est un film de résine synthétique ; et
(iii) la couche d'encre (3) comprend une résine adhésive qui est une résine à base acrylique, et un pigment,
**caractérisé en ce que**
la résine à base acrylique est un élastomère acrylique, la couche barrière (4) comprenant un film en polyester.

2. Ruban pour dispositif d'inscription d'étiquettes selon la revendication 1, dans lequel la structure en couche est une structure en couches comprenant au moins une couche de traitement (1), une couche substrat (2), une couche d'encre (3), une couche barrière (4), une couche adhésive (5) et une couche séparatrice (6), dans cet ordre.

3. Ruban pour dispositif d'inscription d'étiquettes selon la revendication 1 ou 2, dans lequel la couche barrière (4) comprend au moins deux couches.

4. Ruban pour dispositif d'inscription d'étiquettes selon l'une quelconque des revendications 1 à 3, dans lequel l'épaisseur de couche barrière (4) est de 1 µm à 70 µm.

5. Ruban pour dispositif d'inscription d'étiquettes selon l'une quelconque des revendications 1 à 4, dans lequel l'épaisseur de couche substrat est de 5 µm à 300 µm.

6. Ruban pour dispositif d'inscription d'étiquettes selon l'une quelconque des revendications 1 à 5, dans lequel le rapport entre l'épaisseur de la couche substrat (2) et l'épaisseur de la couche barrière (4) est couche substrat:couche barrière = 3:1 à 1:1.
